**Europäisches Patentamt**

(19) **European Patent Office**

**Office européen des brevets**

(11) Publication number : **0 380 454 B1**

# (12) EUROPEAN PATENT SPECIFICATION

(45) Date of publication of patent specification :
16.12.92 Bulletin 92/51

(51) Int. Cl.⁵ : **B60H 1/00,** G05G 25/02

(21) Application number : **90830013.0**

(22) Date of filing : **16.01.90**

(54) A control unit for a motor vehicle air-conditioning system.

(30) Priority : **20.01.89 IT 5282389 U**

(43) Date of publication of application :
**01.08.90 Bulletin 90/31**

(45) Publication of the grant of the patent :
**16.12.92 Bulletin 92/51**

(84) Designated Contracting States :
**DE ES FR GB IT SE**

(56) References cited :
**DE-A- 3 818 565**
**FR-A- 2 447 493**
**FR-A- 2 483 559**
**FR-A- 2 599 441**
**GB-A- 2 001 385**

(73) Proprietor : **BORLETTI CLIMATIZZAZIONE
S.r.l.
Frazione Masio, 24
I-10046 Poirino (Torino) (IT)**

(72) Inventor : **Lovera, Giovanni
Via Tanaro 5
I-12069 Cinzano Santa Vittoria D'alba (IT)**

(74) Representative : **Quinterno, Giuseppe et al
c/o Jacobacci-Casetta & Perani S.p.A. Via
Alfieri, 17
I-10121 Torino (IT)**

## Description

The present invention relates to a control unit for components of a motor vehicle air-conditioning system, particularly shutters for choking the air flow, comprising at least one transmission lever pivoted to the support structure of the system and having at least one pin slidable in a guide associated with a component of the system which is pivoted to the structure, for causing the movement thereof according to a predetermined law (FR-A-2447 493).

A control unit formed in this way includes a transmission lever which is of the rocker-arm type and has two pins arranged at the ends of the transmission lever, the first being adapted for sliding in a guide associated with a manual or electrically-assisted control lever and the second for sliding in a radial guide of a shutter which is pivoted to the structure of the air-conditioning system. By virtue of this arrangement it is possible, in dependence on the different shapes of the guides and on the lengths of the respective arms of the rocker-arm transmission lever, to achieve particular laws for the movement of the choking shutter. For example, the shutter can be made to pivot beyond a particular working angle of the operating lever.

The normal techniques by which the parts of the control unit are made (the injection moulding of plastics material) does not permit a precise coupling to be achieved between the pins and the guides, with the result that there is troublesome play between these elements which makes the kinematic mechanism of the control unit imprecise.

Precise coupling between the pins and the guides could be achieved by an additional finishing operation on the pins, this further operation involving a considerable increase in the cost of the air-conditioning system.

The object of the present invention is to provide a control unit of the type specified at the beginning of the description which enables the above problem to be overcome simply and cheaply.

According to the invention, this object is achieved by virtue of the fact that the pins have radial resilient means for ensuring the resilient take-up of the play between the pins and the guides.

In particular, each pin has a substantially S-shaped cross-section and comprises a central cylindrical portion with two opposite faces which are rounded with a diameter substantially corresponding to the width of the guide, and two integral resilient portions which are connected to the central portion, the resilient portions also being rounded with a diameter larger than the width of the guide.

By virtue of this characteristic, the presence of the resilient portions enables any play between the pins and the guides to be eliminated, ensuring the precise and reliable operation of the control unit, as well as enabling the normal rotation and sliding of the pins within the guides.

Further characteristics and advantages of the control unit according to the invention will become clear from the detailed description which follows with reference to the appended drawings, provided by way of non-limiting example, in which:

Figure 1 is a partially-sectioned perspective view of a control unit according to the invention,

Figure 2 is a perspective view of a detail of Figure 1, on an enlarged scale,

Figure 3 is a plan view taken on the arrow III of Figure 2, and

Figure 4 is a section taken on the line IV-IV of Figure 3.

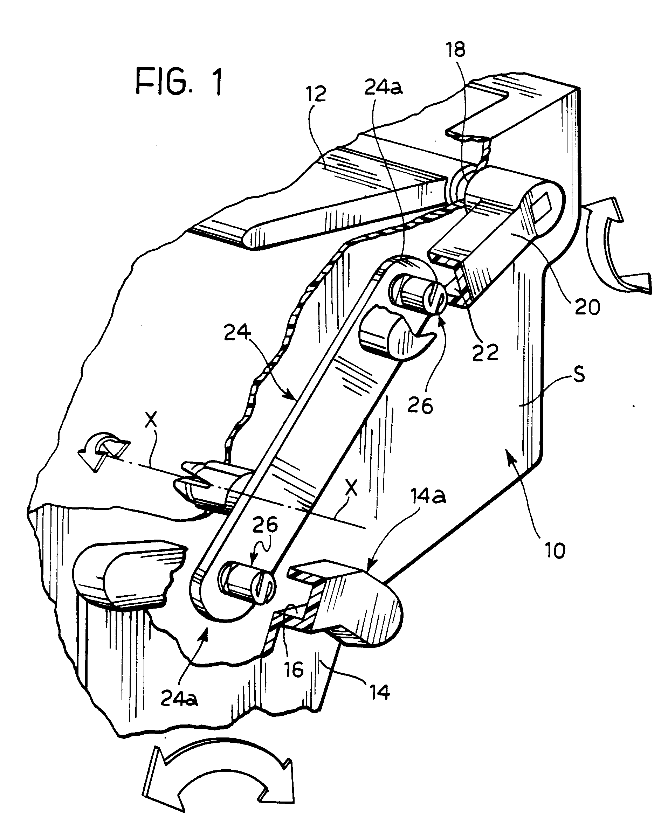

With reference to the drawings, a unit for controlling a choking shutter 12 associated with a motor vehicle air-conditioning system is generally indicated 10. The air-conditioning system includes, in known manner, a structure S within which the air ducts and various components of the system itself (heating radiators, fans, etc.) are arranged. An operating lever 14 (shown only partially in Figure 1) is pivoted to the structure S and a shaped guide 16 with a U-shaped cross section is provided at one of its ends 14a.

The shutter 12 is pivoted to the structure S of the system in correspondence with an articulation pin 18 to one end of which is keyed a radial arm 20 in which a guide 22, also of a U-shaped cross-section, is defined.

A transmission lever 24 of the rocker-arm type, which is interposed between the arm 20 of the shutter 12 and the end 14a of the control lever 14, is pivoted to the structure S about an axis X-X substantially parallel to the articulation pin 18 of the shutter 12 and has ends 24a in correspondence with which resilient pins 26, formed integrally with the lever, are inserted in the guides 16 and 22.

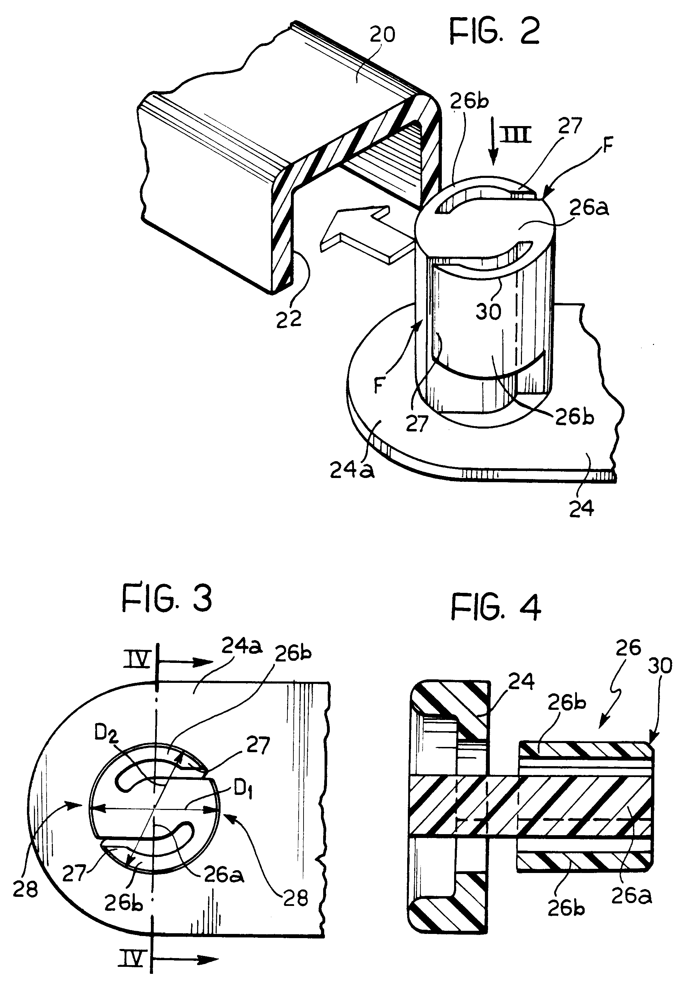

Each pin 26 is arranged parallel to the axis X-X of articulation of the transmission lever 24 to the support structure S and has a central cylindrical portion 26a with diametrally-opposed faces 28 which are rounded with a diameter $D_1$ substantially corresponding to the width of the guide 16 or 22. A pair of appendages 26b project from the cylindrical portion 26a of each pin 26 at a certain distance from the flat body of the lever 24, and are connected to the faces 28 of the central cylindrical portion 26a to define a circular cylindrical conformation of the pin 26 the lateral wall of which has longitudinal slits F in correspondence with the ends 27 of the appendages 26b. The cylinder defined by the appendages 26b has a diameter $D_2$ which, in correspondence with the respective ends 27, is slightly greater than the diameter $D_1$ of the cylindrical portion 26a. Therefore, given the particular shape of the pin 26, which is S-shaped in cross-section (Figure 3), the resilient appendages 26b are urged radially towards the centre of the cylindrical portion 26a when each pin 26 is inserted into the respective guide 16 or 22, enabling the elimination of any play existing between the pin and the guide. The insertion of the pins 26 into the guides is facilitated by the presence of a chamfer 30 provided in correspondence with the free end of each pin.

As well as being used for the control of the choking shutters, the control unit described above can, to advantage, be associated with any component of an air-conditioning system.

## Claims

1. A control unit for components of a motor vehicle air-conditioning system, particularly shutters for choking and/or shutting off the air flow, including at least one transmission lever (24) pivoted to the support structure of the system and having at least one pin (26) slidable in a guide (16,22) associated with a component of the system which is pivoted to the structure, for causing the movement thereof according to a predetermined law, characterised in that the pin (26) has radial resilient means (26b) for ensuring the resilient take-up of the play between the pin (26) and the guide (16, 22).

2. A control unit according to Claim 1, characterised in that the pin (26) has a substantially S-shaped cross-section and comprises a central cylindrical portion (26a) with two opposite faces (28) which are rounded with a diameter substantially corresponding to the width of the guide (16, 22), and two integral resilient portions (26b) which are connected to the central portion (26a), the resilient portions (26b) being rounded with a diameter $(D_2)$ which is larger than the width of the guide (16, 22).

3. A control unit for shutters for choking the air flow of a motor vehicle air-conditioning system, comprising at least one rocker-arm-type transmission lever pivoted to a support structure of the system and having ends provided with pins which are adapted to cooperate with guides of a control lever and an operating portion of a shutter pivoted to the structure, respectively, characterised in that each pin (26) has a central cylindrical portion (26a) with two diametrally-opposed faces (28) which are rounded with a diameter $(D_1)$ substantially corresponding to the width of the respective guide (16, 22), from which project two resilient portions (26b) which are rounded with a diameter $(D_2)$ larger than the width of the guide (16, 22) in order to enable the resilient take-up of the play between the pins (26) and the guides (16, 22).

## Patentansprüche

1. Steuereinheit für Komponenten einer Kraftfahrzeug-Klimaanlage, insbesondere für Klappen zum Drosseln und/oder Absperren der Luftströmung umfassend wenigstens einen Übertragungshebel (24), welcher schwenkbar an der Tragstruktur der Anlage gelagert ist und wenigstens einen Stift (26) trägt, welcher in einer Führung (16, 22) verschiebbar ist, die einer schwenkbar an der Struktur gelagerten Komponente des Systems zugeordnet ist, um deren Bewegung nach einer vorgegebenen Gesetzmäßigkeit zu bewirken, dadurch **gekennzeichnet**, daß der Stift (26) radial elastische Mittel (26b) aufweist, die eine elastische Aufnahme des Spiels zwischen dem Stift (26) und der Führung (16, 22) gewährleisten.

2. Steuereinheit nach Anspruch 1, dadurch **gekennzeichnet**, daß der Stift (26) einen im wesentlichen S-förmigen Querschnitt hat und einen zentralen zylindrischen Teil (26a) mit zwei einander abgewandten Flächen (28) aufweist, die entsprechend einem Durchmesser abgerundet sind, der im wesentlichen der Weite der Führung (16, 22) entspricht, sowie zwei daran angeformte elastische Teile (26b), die mit dem zentralen Teil (26a) verbunden sind, wobei die elastischen Teile (26b) entsprechend einem Durchmesser $(D_2)$ abgerundet sind, welcher größer als die Weite der Führung (16, 22) ist.

3. Steuereinheit für Klappen zum Drosseln des Luftstromes einer Kraftfahrzeug-Klimaanlage, umfassend wenigstens einen Übertragungshebel vom Typ eines Kipphebels, welcher schwenkbar an einer Tragstruktur der Anlage gelagert ist und dessen Enden mit Stiften versehen sind, die mit Führungen eines Steuerhebels bzw. eines Betätigungsabschnittes einer schwenkbar an der Struktur gelagerten Klappe zusammenwirken, dadurch **gekennzeichnet**, daß jeder Stift (26) einen zentralen zylindrischen Teil (26a) mit zwei diametral einander abgewandten Flächen (28) hat, die entsprechend einem Durchmesser $(D_1)$ abgerundet sind, der im wesentlichen der Weite der zugeordneten Führung (16, 22) entspricht, von denen ferner zwei elastische Teile (26b) abstehen, die entsprechend einem Durchmesser $(D_2)$ abgerundet sind, welcher größer als die Weite der Führung (16, 22) ist, um eine elastische Aufnahme des Spiels zwischen den Stiften (26) und den Führungen (16, 22) zu ermöglichen.

## Revendications

1. Unité de commande pour les organes d'un système de climatisation de véhicule automobile, en particulier de volets destinés à régler et/ou à arrêter le débit d'air, comprenant au moins un levier de transmission (24) articulé sur la structure support du système et qui porte au moins un tourillon (26) pouvant coulisser dans une glissière (16, 22) associée à un organe du système qui est articulé sur la structure, pour déterminer le mouvement de cet organe en accord avec une loi prédéterminée, caractérisée en ce que le tourillon (26) possède des moyens élastiques radiaux (26$\underline{b}$) destinés à assurer le rattrapage élastique du jeu entre le tourillon (26) et la glissière (16, 22).

2. Unité de commande selon la revendication 1, caractérisée en ce que le tourillon (26) a une section transversale sensiblement en S et comprend une partie cylindrique centrale (26$\underline{a}$) portant deux faces opposées (28) qui sont arrondies avec un diamètre correspondant sensiblement à la largeur de la glissière (16, 22) et deux parties élastiques (26$\underline{b}$) venues de matière qui sont reliées à la partie centrale (26$\underline{a}$), les parties élastiques (26b) étant arrondies avec un diamètre ($D_2$) qui est plus grand que la largeur de la glissière (16, 22).

3. Unité de commande pour volet servant à régler le débit d'air d'un système de climatisation de véhicule automobile, comprenant au moins un levier de transmission du type culbuteur ou du premier genre, articulé sur une structure support du système, et possédant des extrémités munies de tourillons qui sont adaptés pour coopérer respectivement avec des glissières d'un levier de commande et avec une partie de manoeuvre d'un volet articulé sur la structure, caractérisée en ce que chaque tourillon (26) possède une partie cylindrique centrale (26$\underline{a}$) munie de deux faces (28) diamétralement opposées qui sont arrondies avec un diamètre ($D_1$) correspondant sensiblement à la largeur de la glissière respective (16, 22), et sur laquelle font saillie deux parties élastiques (26$\underline{b}$) qui sont arrondies avec un diamètre ($D_2$) plus grand que la largeur de la glissière (16, 22) afin de permettre le rattrapage élastique du jeu entre les tourillons (26) et les glissières (16, 22).

FIG. 1

FIG. 2

FIG. 3

FIG. 4